# EUROPEAN PATENT APPLICATION

(11) **EP 1 965 120 A1**
(43) Date of publication of application: **03.09.2008**
(21) Application number: 07251238.7
(22) Date of filing: 28.02.2007
(51) Int. Cl.: F16M 11/04, F16M 7/00

(54) **Kinematic ball screw adjusters**

(71) Applicant: Selex Sensors and Airborne Systems Limited, Basildon Essex SS14 3EL (GB)
(72) Inventor: Grant, George, Grangemouth FK3 9PB (GB)
(74) Representative: Wojcik, Lucy Eleanor

(57) **Abstract**

The present invention provides a kinematic mounting apparatus comprising: a plurality of spherical mount means (301,302,303); and a plurality of grooved mount means (310,390); wherein said mount means are operable to support a platform (701). The present invention relates to adjustable mounts. In particular, the present invention relates to mounting arrangements for optical devices requiring linear and tilt adjustment whereby a platform, which is usually either a mirror or a support for a mirror, should remain in a stress free condition at all times.

## Description

The present invention relates to adjustable mounts. In particular, the present invention relates to mounting arrangements for optical devices requiring linear and tilt adjustment whereby a platform, which is usually either a mirror or a support for a mirror, should remain in a stress free condition at all times.

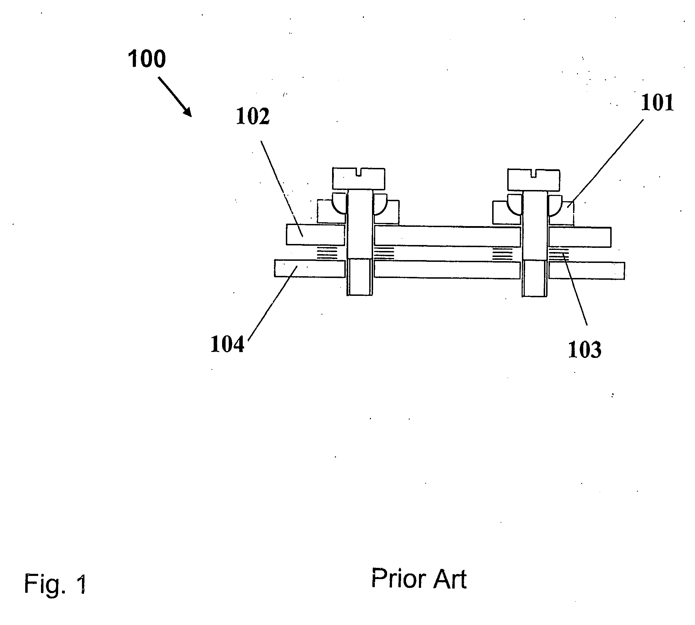

Spherical washers 1, such as the arrangement shown in Figure 1, have been used to mount platforms 2, such as mirrors, while providing for adjustments to be made through the addition of shims 3 to each mount point as necessary. These adjustments allow the platform 2 to be calibrated, for example to point at a particular angle relative to the support surface upon which it is mounted.

These known mounts 5 are limited in the respect that they allow distortion to the mounted platform 2 to be caused by local clamping stress and the repeatability of a position each time a shim 3 is added or subtracted. This leads to a very time consuming alignment process if one tries to limit distortion to a mounted platform 2.

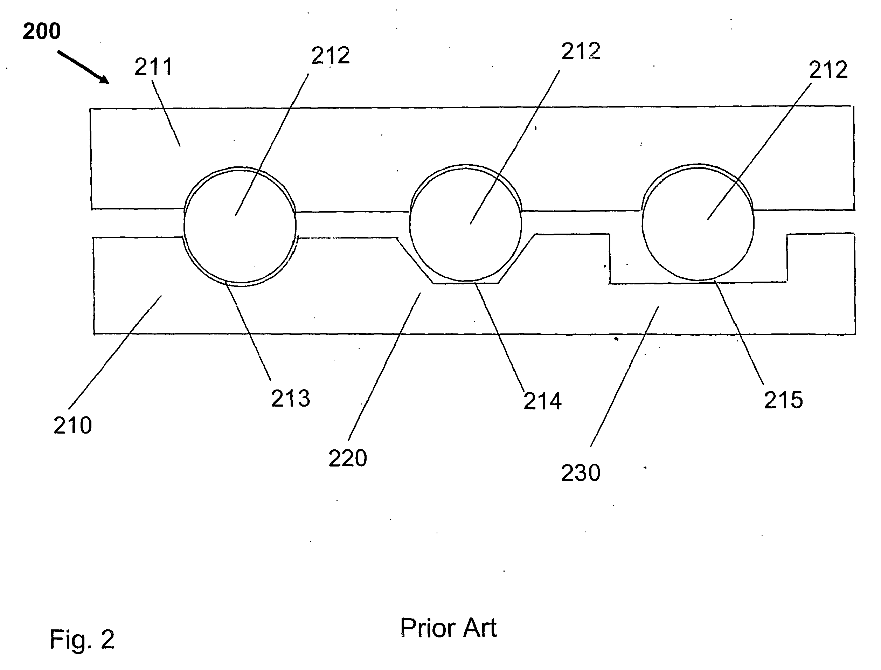

The known kinematic mounts 10, 20, 30 shown in Figure 2 take the form of ball bearings 12 supporting the mirror 11, with each ball bearing 12 supported by a different type of seating 13, 14, 15 at the respective mounts 10, 20, 30, Each seating 13, 14, 15 has a different type of support surface, respectively a substantially hemi-spherical support surface 13, a grooved support surface 14 and a flat support surface 15.

These known kinematic mounts 10, 20, 30 are an improvement over the mounting arrangement 5 shown in Figure 1 but are still not suitably robust for all situations.

The present invention seeks to provide a mounting arrangement capable of calibration both linearly and angularly without stressing the mounted component.

Accordingly, the present invention relates to adjustable mounts. In particular, the present invention relates to mounting arrangements for optical devices requiring linear and tilt adjustment whereby a platform, which is usually either a mirror or a support for a mirror, should remain in a stress free condition at all times.

The present invention thus provides, in a preferred embodiment, a suitable arrangement of mountings that combine particular seating arrangements with kinematic mounts to provide a rigid connection between any two planes using only three screws, each linked by at least one ball bearing in a combination of different seatings such that the planes can be freely adjusted relative to one another.

The apparatus is particularly suitable for optical applications where the optical plane has to be calibrated both linearly and angularly without stressing the optical component,

Further, this mounting arrangement can also be used to remove thermal stress between components of differing thermal expansion or to remove stress caused by misalignments due to manufacturing tolerances.

Specific embodiments of the invention will now be described, by way of example only and with reference to the accompanying drawings that have like reference numerals, wherein:-
Figure 1 is a diagram showing a known mount using shims and spherical washers;
Figure 2 is a diagram showing the three different mountings used in a standard, known, kinematic mount;
Figure 3 is a diagram showing a basic arrangement of three different mountings as used in a first embodiment of the present invention;
Figure 4 is a diagram showing an alternative arrangement for coupling the ball with the socket of the kinematic mount according to a preferred embodiment of the present invention shown in Figure 3;
Figure 5 is a diagram showing how the alternative coupling arrangement of the preferred embodiment as shown in Figure 4 can be used with regard to the double ball-socket mount 60 shown in Figure 3;
Figure 6 is a diagram showing a typical layout arrangement of the kinematic mountings of the present invention as shown in either embodiment;
Figure 7 is a diagram showing the mounting arrangement according to a specific embodiment of the present invention holding a platform in place;
Figure 8 is a diagram showing a ball-screw adjuster set according to an embodiment of the present invention; and
Figure 9 is a diagram showing an exploded view of the ball-screw adjuster set shown in Figure 8.

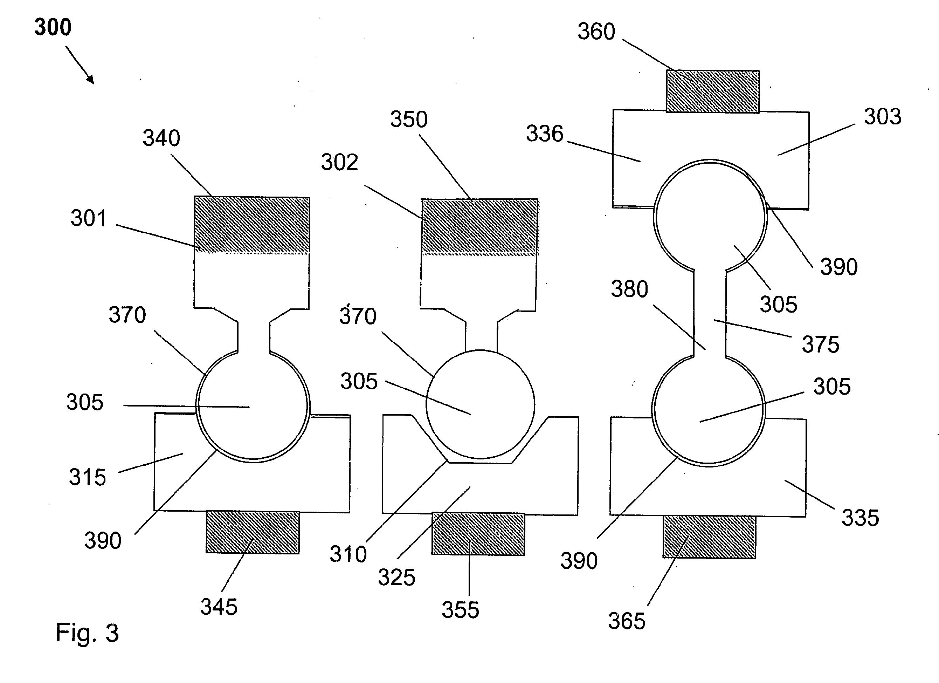

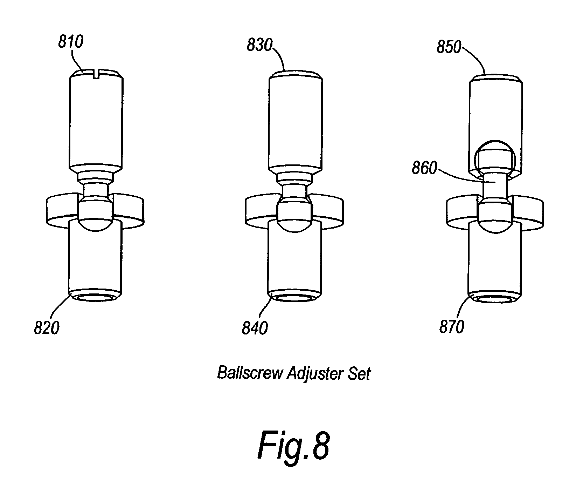

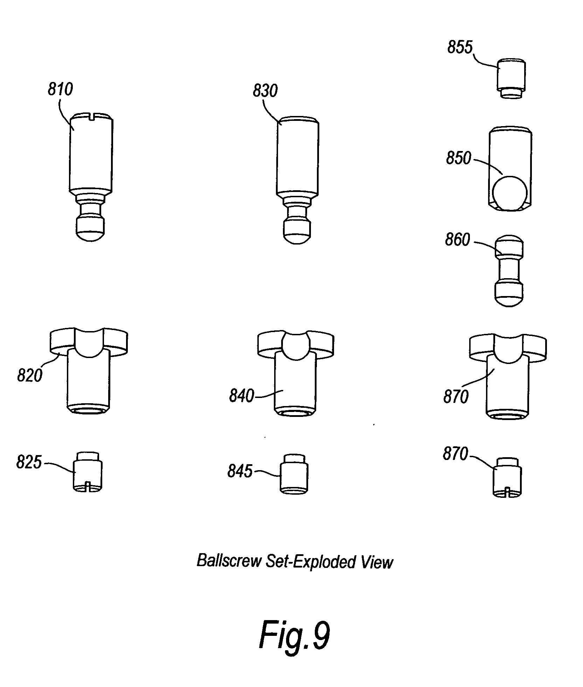

A first specific embodiment will now be described with reference to Figures 3 to 9:

As shown in Figure 3, a mounting arrangement 300 is provided to support a platform 701 using three different screw assemblies 301, 302, 303, each having different seating arrangements 310, 390 that are mounted on a reference plate 601.

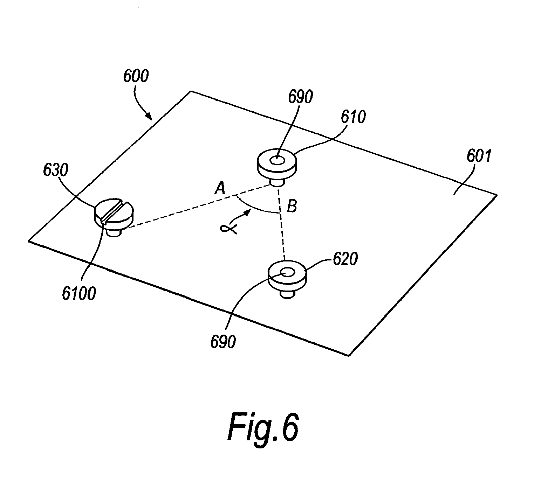

Referring briefly to Figure 6, it is seen that the screw assemblies 301, 302, 303 are arranged on the reference plate 601 at three points of a triangular arrangement 600 forming an angle α between the lines A (610 to 630) and B (610-620). Angle α is preferably 90°.

Each screw assembly 301, 302, 303 uses at least one ball bearing 305 attached to a screw member 340, 350, 360, allowing the screw to be turned in either direction to respectively increase or decrease the distance between the platform 701 and the reference plate 601. The ball bearings 305 are mounted on the different seatings 310, 390: the first screw assembly 301 has a substantially hemi-spherical seating 390; the second screw assembly 302 has a grooved seating 310; and the third screw assembly 303 has two substantially hemispherical seatings 390. This mounting arrangement 300 allows for different load carrying capabilities and different numbers of degrees of freedom at each screw assembly 301, 302, 303, enabling calibration of the mounting arrangement 300 both linearly and angularly without stressing the platform 701, which is usually an optical component, being mounted.

The first screw assembly 301 comprises two portions: a mount portion 370 comprising a ball bearing 305 affixed to the end of a screw member 340, the mount portion 370 being fixed to the underside of the platform 701 to be mounted using the screw member 340; and a separate seating portion 315 fixed to the reference plate 601, the seating portion 315 comprising a substantially hemi-spherical socket 390 on one end into which the ball bearing 305 of the mount portion 370 is seated and a screw member 345 formed on the other end which enables the seating portion 315 to be screwed into the reference plate 601.

The second screw assembly 302 also comprises two portions: a mount portion 370 comprising a ball bearing 305 affixed to the end of a screw portion 350, the mount portion 370 being fixed to the underside of the platform 601 to be mounted; and a separate seating portion 325 fixed to the reference plate 701, the seating portion 325 comprising a groove 310 at one end into which the ball bearing 305 is seated and a screw member 355 formed on the other end which enables the seating portion 325 to be screwed into the reference plate 601.

Finally, the third screw assembly 303 comprises three portions: a mount portion 380 comprising a first ball bearing 305 and a second ball bearing 305, each affixed to opposite ends of a connecting member 375; a first seating portion 335 comprising a hemi-spherical socket 390 into which the first ball bearing 305 is seated and which is fixed to the underside of the platform 701 to be mounted by a screw portion 360; and a second seating portion 336 comprising a hemi-spherical socket 390 into which the second ball bearing 305 is seated and which is fixed to the reference plate 601 by means of a screw portion 365.

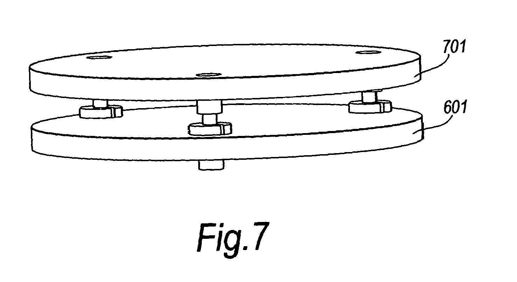

The screw assemblies 301, 302, 303 must be used as a set to provide a kinematic mount effect, as shown in Figures 6 and 7. Locking one end of each assembly 301, 302, 303 into the reference plate 601 and screwing the other end into the platform 701 allows for relative linear adjustment between the reference plate 601 and the platform 701 by rotating all three mirror screws 340, 350, 360 and relative tilt adjustment between the reference plate 601 and the platform 701 by rotating individual assemblies 301, 302, 303 using the screws connecting the seating portions 315, 325, 335 to the reference plate 601. The screws can then be locked once the adjustment is complete.

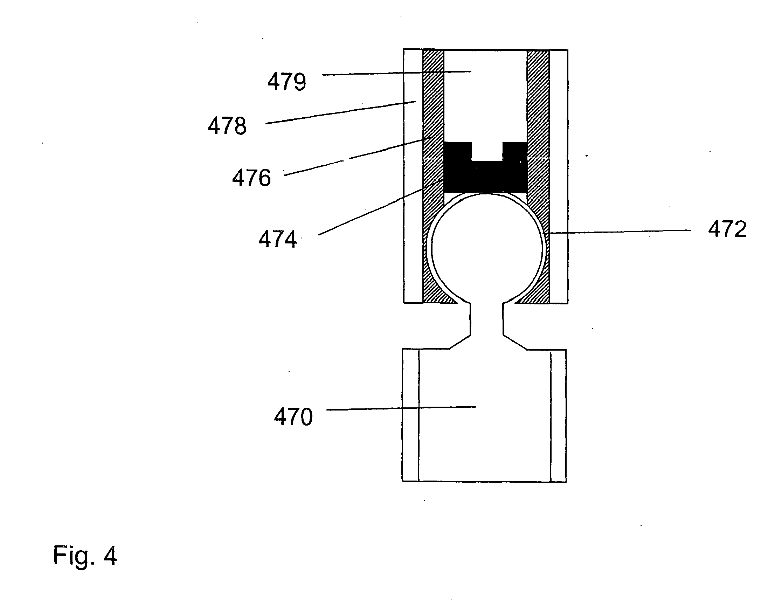

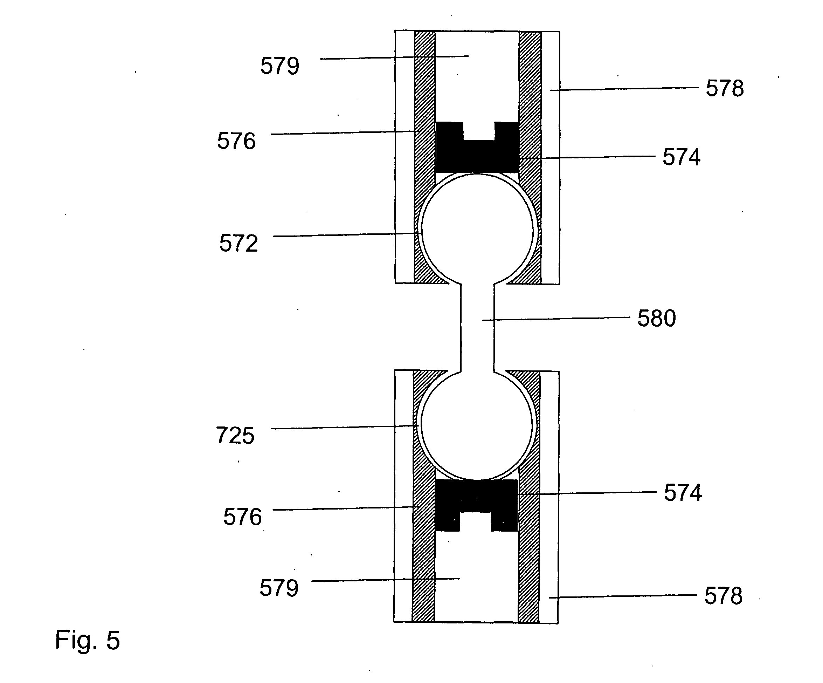

In a preferred embodiment of the present invention, the ball bearings 305 in the screw assemblies 301, 302, 303 are surrounded by enclosed supports as shown in Figures 4 and 5. In this embodiment, a grubscrew 474 adjusts the pressure between the ball bearing 305 and the seating 472 to remove an end float and allow three rotational degrees of freedom and zero linear degrees of freedom in the first and second mounts 301, 302. In the third mount 303, this arrangement allows three rotational degrees of freedom at each ball end resulting in three rotational degrees of freedom and two linear degrees of freedom. This arrangement allows the ball bearings to be inserted into the enclosed supports when the grubscrews 474 are not in the locked position and, when the grubscrews 474 are in the locked position, the ball bearings cannot be removed from the enclosed supports, providing a more secure support arrangement.

Alternatively, the grubscrews 474 could be locked and the reference plate screws can be used as the adjusting screws. This has the advantage that the grubscrews 474 could be linked to drive motors to provide an active mirror adjustment system.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A kinematic mounting apparatus comprising:
a plurality of spherical mount means; and
a plurality of grooved mount means;
wherein said mount means are operable to support a platform.

2. A kinematic mounting apparatus according to claim 1 wherein the mount means each comprise a ball.

3. A kinematic mounting apparatus according to claim 2, wherein one of the said plurality of spherical mounting means comprises two balls joined by a connecting bar.

4. A kinematic mounting apparatus according to any previous claim wherein said balls are enclosed in socket mounts.

5. A kinematic mounting apparatus according to any previous claim wherein the spherical mount comprises a hemispherical socket in which said ball can be accommodated.

6. A kinematic mount apparatus substantially as hereinbefore described in relation to Figures 3 to 5.
